# EUROPÄISCHE PATENTSCHRIFT

(11) **EP 4 259 498 B1**
(45) Veröffentlichungstag und Bekanntmachung des Hinweises auf die Patenterteilung: **10.09.2025**
(21) Anmeldenummer: 21824505.8
(22) Anmeldetag: 29.11.2021
(51) Int. Cl.: B60T 13/26, B60T 8/17, B60T 8/24

(54) **DRUCKLUFTBREMSANLAGE EINES ZUGFAHRZEUGS**
AIR BRAKE SYSTEM OF A TOWING VEHICLE
SYSTÈME DE FREINS À AIR D'UN VÉHICULE DE REMORQUAGE

(30) Priorität: 09.12.2020 DE 102020132722
(43) Veröffentlichungstag der Anmeldung: 18.10.2023
(73) Patentinhaber: ZF CV Systems Europe BV, 1170 Brüssel (BE)
(72) Erfinder: KLOSTERMANN, Thilo, 30890 Barsinghausen (DE); SCHWAGMEYER, Florian, 31311 Uetze - Dollbergen (DE)
(74) Vertreter: Rabe, Dirk-Heinrich
(86) Internationale Anmeldenummer: PCT/EP2021/083278
(87) Internationale Veröffentlichungsnummer: WO 2022/122433

(56) Entgegenhaltungen:
- DE-A1- 102006 054 433
- DE-A1- 102010 050 580
- DE-A1- 102015 015 922
- DE-A1- 102019 103 661
- DE-C5- 102008 048 207

## Beschreibung

Die Erfindung betrifft eine Druckluftbremsanlage eines Zugfahrzeugs, mit zwei Betriebsbremskreisen, die jeweils einen Druckluftspeicher, eine von dem jeweiligen Druckluftspeicher zu einem Fußbremsventil geführte Vorratsleitung und eine von dem Fußbremsventil zu Radbremsleitungen und an diese angeschlossene Radbremszylinder einer jeweiligen Fahrzeugachse geführte Achsbremsleitung aufweisen, sowie mit einem Parkbremskreis, der einen dritten Druckluftspeicher, eine von dem dritten Druckluftspeicher zu einem Parkbremsventil geführte Vorratsleitung sowie eine Achsbremsleitung aufweist, welche von dem Parkbremsventil zu Radbremsleitungen und an diese angeschlossene Federspeicherbremszylinder einer Fahrzeugsachse führt, und mit einem Anhängersteuerventil, welches mindestens einem direkten Steuereingang sowie einen invertierten Steuereingang aufweist, wobei an den mindestens einen direkten Steuereingang eine an eine Bremsleitung eines der beiden Betriebsbremskreise angeschlossene Bremssteuerleitung angeschlossen ist, und bei dem an dem invertierten Steuereingang eine an eine Bremsleitung des Parkbremskreises angeschlossene Bremssteuerleitung angeschlossen ist, sowie mit einer Ventileinrichtung zur Steuerung einer von dem Fußbremsventil unabhängigen Abbremsung eines angekoppelten Anhängerfahrzeugs.

Im normalen Bremsbetrieb wird ein Fahrzeuggespann, welches aus einem Zugfahrzeug, wie einem Lastkraftwagen oder einer Sattelzugmaschine, und einem Anhängerfahrzeug, wie einem Deichselanhänger oder einem Sattelauflieger, besteht, üblicherweise mittels einer Betätigung eines Fußbremsventils im Zugfahrzeug abgebremst. Über das Fußbremsventil wird in zwei Betriebsbremskreisen jeweils aus einem eingangsseitig anstehenden Vorratsdruck eines zugeordneten Druckluftspeichers ein geeigneter Bremsdruck ausgesteuert und in eine über Radbremsleitungen in die Radbremszylinder der Vorderachse oder Hinterachse des Zugfahrzeugs führende Achsbremsleitung geleitet. Die Abbremsung des Anhängerfahrzeugs erfolgt dadurch, dass der Bremsdruck an mindestens einer der Bremsleitungen der Vorderachse oder Hinterachse des Zugfahrzeugs mittels einer Bremssteuerleitung abgegriffen und an einen direkten Steuereingang des Anhängersteuerventils geleitet wird. In dem Anhängersteuerventil wird in Abhängigkeit von diesem als Steuerdruck wirksamen Bremsdruck ein Bremssteuerdruck ausgesteuert und über einen Bremssteuerausgang an einen Kupplungskopf "Bremse" (gelb) geführt. Dieser Bremssteuerdruck wird in einem Anhängerbremsventil des Anhängerfahrzeugs in einen Bremsdruck für die dortigen Radbremsen umgesetzt.

Wenn ein Fahrzeuggespann eine Gefällstrecke oder eine durch eine verschmutzte, nasse oder vereiste Fahrbahn rutschige Straße befährt, kann es kurzzeitig zu einer höheren Geschwindigkeit des Anhängerfahrzeugs im Vergleich zum Zugfahrzeug kommen, welches häufig zu einem Einknicken des Fahrzeuggespanns um die Anhängerkupplung oder Deichselachse beziehungsweise um die Sattelkupplung führen kann. Zur Vermeidung eines derartigen Einknickens wird üblicherweise eine Streckbremsung des Anhängerfahrzeugs durchgeführt, bei welcher das Fahrzeuggespann durch eine vom Fußbremsventil unabhängige Betätigung der Radbremsen des Anhängerfahrzeugs gerade gezogen wird.

Soll das Anhängerfahrzeug fußbremsventilunabhängig, also ohne eine Betätigung des Fußbremsventils abgebremst werden, ist dies grundsätzlich auf zwei Arten möglich. Zum einen kann das Anhängerfahrzeug dadurch abgebremst werden, dass ein mehr oder weniger hoher Bremssteuerdruck über eine Bremssteuerleitung und eine Ventileinrichtung mit mindestens einer in der Bremssteuerleitung angeordneten, elektronisch steuerbaren Ventileinheit an einen der üblicherweise zwei direkten Steuereingänge des Anhängersteuerventils geleitet wird. Zudem kann das Anhängerfahrzeug auch dadurch abgebremst werden, dass eine an einen invertierten Steuereingang des Anhängersteuerventils führende Bremssteuerleitung, welche während der Fahrt und ausgelegter Parkbremse belüftet ist, über eine Ventileinrichtung mit mindestens einer in der Bremssteuerleitung angeordneten, elektronisch steuerbaren Ventileinheit mehr oder weniger stark entlüftet wird.

In der DE 10 2015 015 922 A1 ist eine Druckluftbremsanlage eines Zugfahrzeugs beschrieben, bei der eine Bremssteuerleitung über ein als ein 3/2-Wege-Magnetventil ausgebildetes Umschaltventil von dem Druckluftspeicher eines Parkbremskreises an einen ersten Eingang eines Wechselventils geführt ist. An den anderen Eingang dieses Wechselventils ist eine von der Achsbremsleitung der Hinterachse abzweigende Bremssteuerleitung angeschlossen. Von dem Ausgang dieses Wechselventils ist eine Bremssteuerleitung an einen der beiden direkten Steuereingänge eines Anhängersteuerventils geführt. In dieser Bremssteuerleitung ist eine Ventileinheit angeordnet, die ein als ein 2/2-Wege-Magnetventil ausgebildetes Einlassventil und ein als ein 2/2-Wege-Magnetventil ausgebildetes Auslassventil umfasst. Durch eine Bestromung des Umschaltventils wird der Vorratsdruck des Druckluftspeichers über das Wechselventil in die zu dem Anhängersteuerventil führende Bremssteuerleitung geleitet. Mittels der in dieser angeordneten Ventileinheit kann der an dem betreffenden Steuereingang anliegende Bremssteuerdruck moduliert werden.

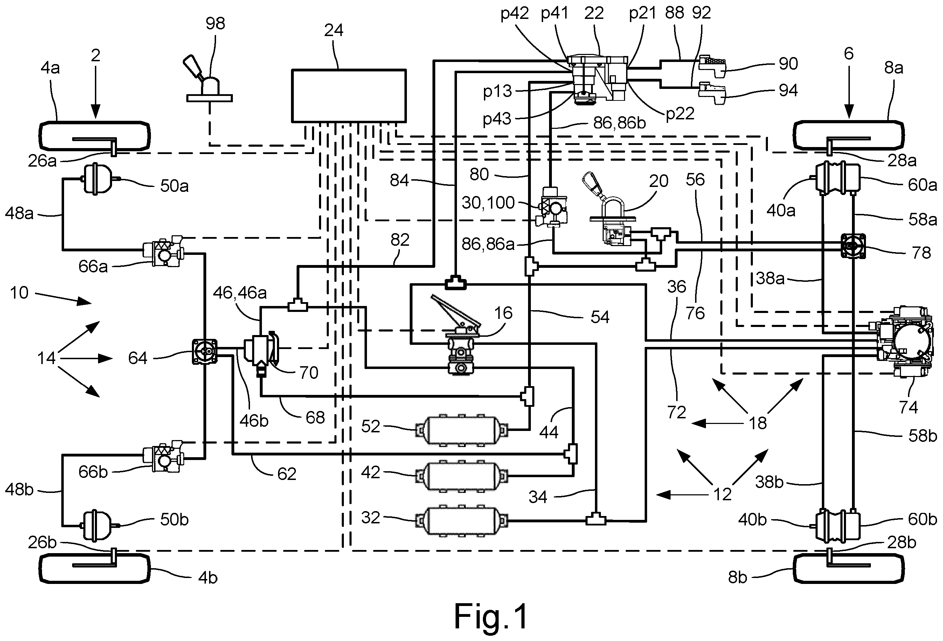

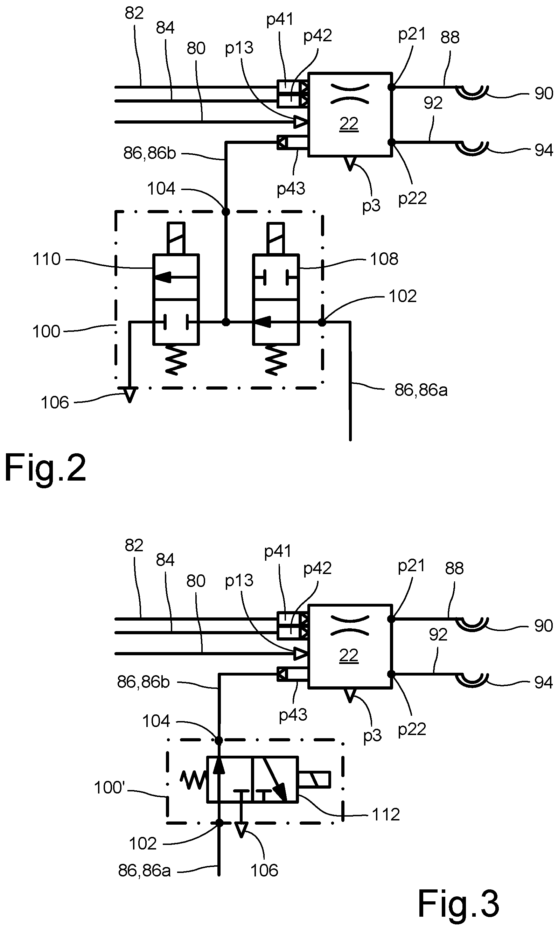

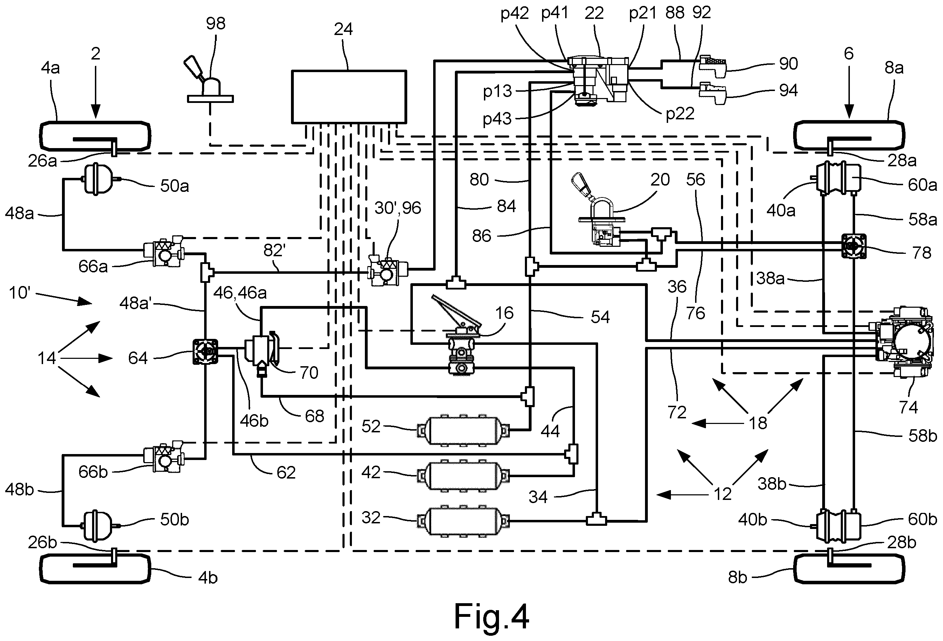

Aus der DE 10 2006 054 433 A1 sind vier Ausführungen einer Streckbremseinrichtung in einer Druckluftbremsanlage eines Zugfahrzeugs bekannt, bei der eine mit einer Ventileinrichtung versehene Bremssteuerleitung von dem Druckluftspeicher eines Parkbremskreises an den invertierten Steuereingang eines Anhängersteuerventils geführt ist. In einer ersten Ausführungsform gemäß der dortigen Fig. 1 weist die Ventileinrichtung eine als ein 3/2-Wege-Magnetventil ausgebildete Ventileinheit auf. **In** einer zweiten Ausführungsform gemäß der dortigen Fig. 2 weist die Ventileinrichtung neben der gerade genannten Ventileinheit auch ein dieser nachgeschaltetes, als ein 2/2-Wege-Magnetventil ausgebildetes Abschaltventil auf. In einer dritten Ausführungsform gemäß der dortigen Fig. 3 weist die Ventileinrichtung ein elektrisch ansteuerbares Magnetrelaisventil auf. In der vierten Ausführungsform gemäß der dortigen Fig. 4 weist die Ventileinrichtung ein druckgesteuertes Relaisventil und ein diesem zugeordnetes, als ein 3/2-Wege-Magnetventil ausgebildetes Vorsteuerventil auf. Über die jeweilige Ventileinrichtung ist der an dem invertierten Steuereingang des Anhängersteuerventils anliegende Bremssteuerdruck einstellbar.

Die DE 10 2008 048 207 C5 zeigt und beschreibt eine Druckluftbremsanlage eines Zugfahrzeugs, bei der eine mit einer Ventileinrichtung versehene Bremssteuerleitung von einem Druckluftspeicher eines Parkbremskreises verzweigt und einerseits an den Steuereingang eines druckgesteuerten Relaisventils sowie andererseits an den invertierten Steuereingang eines Anhängersteuerventils geführt ist. Die Ventileinrichtung umfasst eine als ein 3/2-Wege-Magnetventil ausgebildete Ventileinheit und ein diesem nachgeschaltetes, als ein 2/2-Wege-Magnetventil ausgebildetes Absperrventil. Das Relaisventil ist zwischen einer an den Druckluftspeicher angeschlossenen Vorratsleitung und einer zu den Federspeicherbremszylindern einer Fahrzeugachse führenden Achsbremsleitung angeordnet. Dem Steuereingang des Relaisventils ist ein weiteres, als ein 2/2-Wege-Magnetventil ausgebildetes Absperrventil vorgeschaltet. Die Ventileinrichtung dient sowohl zur Einstellung des an dem Steuereingang des Relaisventils anliegenden Bremssteuerdruckes als auch zur Einstellung des an dem invertierten Steuereingang des Anhängersteuerventils anliegenden Bremssteuerdruckes. Zur Betätigung der Radbremsen des Anhängerfahrzeugs in einer Streckbremsfunktion ist zunächst die Umschaltung des dem Relaisventil zugeordneten Absperrventils in seine Schließstellung und die Umschaltung des Absperrventils der Ventileinrichtung in seine Offenstellung erforderlich. Die Einstellung beziehungsweise Modulation des an dem invertierten Steuereingang des Anhängersteuerventils anliegenden Bremssteuerdruckes durch eine mehr oder weniger starke Entlüftung erfolgt dann über die Ventileinheit.

Angesichts des teilweise recht aufwendigen Aufbaus und der relativ komplizierten Steuerbarkeit der genannten Ventileinrichtungen von Druckluftbremsanlagen liegt der vorliegenden Erfindung die Aufgabe zugrunde, eine Druckluftbremsanlage mit einer einfach aufgebauten sowie einfach steuerbaren Ventileinrichtung vorzustellen, mittels welcher eine fußbremsventilunabhängige Streckbremsfunktion zur Abbremsung eines an ein Zugfahrzeug angekoppelten Anhängerfahrzeugs ausführbar ist.

Die Lösung dieser Aufgabe ist mit einer Druckluftbremsanlage gemäß Anspruch 1 erreicht.

### Austauschseite 5 und 5a (Reinschrift)

Demnach betrifft die Erfindung eine Druckluftbremsanlage eines Zugfahrzeugs, mit einem Parkbremskreis, der einen dritten Druckluftspeicher, eine von dem dritten Druckluftspeicher zu einem Parkbremsventil geführte Vorratsleitung sowie eine Achsbremsleitung aufweist, welche von dem Parkbremsventil zu Radbremsleitungen und an diese angeschlossene Federspeicherbremszylinder einer Fahrzeugsachse führt, und mit einem Anhängersteuerventil, welches mindestens einem direkten Steuereingang sowie einen invertierten Steuereingang aufweist, sowie mit einer Ventileinrichtung zur Steuerung einer von dem Fußbremsventil unabhängigen Abbremsung eines angekoppelten Anhängerfahrzeugs, wobei die Ventileinrichtung eine elektronisch steuerbare Ventileinheit aufweist, und diese Ventileinheit in der an den invertierten Steuereingang des Anhängersteuerventils angeschlossenen Bremssteuerleitung angeordnet ist, und die Ventileinheit einen Eingang, einen Ausgang und einen Entlüftungsausgang aufweist, wobei an den Ausgang der anhängersteuerventilseitige Abschnitt der Bremssteuerleitung angeschlossen ist, wobei und wobei der anhängersteuerventilseitige Abschnitt der Bremssteuerleitung über die Ventileinheit wechselweise mit dem Eingang oder mit dem Entlüftungsausgang verbindbar ist.

Zur Lösung der gestellten Aufgabe ist bei dieser Druckluftbremsanlage vorgesehen, dass die Druckluftbremsanlage zumindest zwei Betriebsbremskreise aufweist, die jeweils einen Druckluftspeicher, eine von dem jeweiligen Druckluftspeicher zu einem Fußbremsventil geführte Vorratsleitung und eine von dem Fußbremsventil zu Radbremsleitungen und an diese angeschlossene Radbremszylinder einer jeweiligen Fahrzeugachse geführte Achsbremsleitung aufweisen, wobei an den mindestens einen direkten Steuereingang des Anhängersteuerventils eine an eine Bremsleitung eines der beiden Betriebsbremskreise angeschlossene Bremssteuerleitung angeschlossen ist, , und bei dem an dem invertierten Steuereingang des Anhängersteuerventils eine an eine Bremsleitung des Parkbremskreises angeschlossene Bremssteuerleitung angeschlossen ist, und, und dass an den Eingang der Ventileinheit ein parkbremsventilseitiger Abschnitt der Bremssteuerleitung angeschlossen ist.

Dadurch, dass die Ventileinrichtung eine elektronisch steuerbare Ventileinheit aufweist, welche in der genannten Weise in der an den invertierten Steuereingang des

Anhängersteuerventils geführten Bremssteuerleitung angeordnet ist, kann das Anhängerfahrzeug einfach und ohne eine Beeinträchtigung der Funktion der Betriebsbremskreise des Zugfahrzeugs fußbremsventilunabhängig abgebremst werden. Dies geschieht dadurch, dass der anhängersteuerventilseitige Abschnitt der Bremssteuerleitung mittels der Ventileinheit mit dem Entlüftungsausgang verbunden und damit der invertierte Steuereingang des Anhängersteuerventils entlüftet wird.

Gemäß einer Weiterbildung der geschilderten Druckluftbremsanlage kann vorgesehen sein, dass die Ventileinheit ein Einlassventil und ein Auslassventil aufweist, dass das Einlassventil als ein 2/2-Wege-Magnetventil ausgebildet und zwischen dem Eingang sowie dem Ausgang der Ventileinheit angeordnet ist, und dass das Auslassventil als ein 2/2-Wege-Magnetventil ausgebildet ist sowie zwischen dem Ausgang und dem Entlüftungsausgang der Ventileinheit angeordnet ist, wobei der Eingang der Ventileinheit im unbestromten Zustand des Einlassventils mit dem Ausgang verbunden sowie im bestromten Zustand des Einlassventils abgesperrt ist, und wobei der Entlüftungsausgang im unbestromten Zustand des Auslassventils abgesperrt sowie im bestromten Zustand des Auslassventils mit dem Ausgang verbunden ist.

Alternativ dazu kann vorgesehen sein, dass die Ventileinheit als ein 3/2-Wege-Magnetventil mit einem Eingang, einem Ausgang und einem Entlüftungsausgang ausgebildet ist, wobei der Eingang der Ventileinheit im unbestromten Zustand dieses Magnetventils mit dem Ausgang verbunden sowie im bestromten Zustand abgesperrt ist, und wobei der Entlüftungsausgang im unbestromten Zustand dieses Magnetventils abgesperrt sowie im bestromten Zustand mit dem Ausgang verbunden ist.

Aufgrund einer ähnlichen Funktion ist bevorzugt vorgesehen, dass die Ventileinheit baugleich wie eine ABS-Ventileinheit ausgebildet ist, welche in mindestens einer Radbremsleitung einer Fahrzeugachse angeordnet ist. Eine ABS-Ventileinheit ist eine Ventileinheit, mittels welcher die Funktion eines seit langem bekannten Antiblockiersystems des Fahrzeugs steuerbar ist. Hierdurch werden unnötige Entwicklungskosten vermieden und aufgrund der höheren Anzahl verwendeter Gleichteile Herstellungs- und Logistikkosten eingespart.

Zur weiteren Verdeutlichung der Erfindung ist der Beschreibung eine Zeichnung mit zwei Ausführungsbeispielen beigefügt. In dieser zeigt
Fig. 1 eine Druckluftbremsanlage eines Zugfahrzeugs mit einer erfindungsgemäßen Ventileinrichtung in einer schematischen Übersichtsdarstellung,
Fig. 2 eine erste Ausführungsform der erfindungsgemäßen Ventileinrichtung in einer schematischen Teilansicht der Druckluftbremsanlage,
Fig. 3 eine zweite Ausführungsform der erfindungsgemäßen Ventileinrichtung in einer schematischen Teilansicht der Druckluftbremsanlage, und
Fig. 4 eine Druckluftbremsanlage eines Zugfahrzeugs mit einer bekannten Ventileinrichtung in einer schematischen Übersicht.

In der Fig. 4 ist demnach eine Druckluftbremsanlage 10' eines Zugfahrzeugs mit einer bekannten, von der Anmelderin bisher verwendeten Ventileinrichtung 30' zur fußbremsventilunabhängigen Abbremsung eines angekoppelten Anhängerfahrzeugs abgebildet. Das Zugfahrzeug ist beispielhaft zweiachsig ausgeführt und weist eine Vorderachse 2 mit beidseitig angeordneten vorderen Rädern 4a, 4b und eine Hinterachse 6 mit beidseitig angeordneten hinteren Rädern 8a, 8b auf.

Die Druckluftbremsanlage 10' umfasst zwei Betriebsbremskreise 12, 14, denen ein gemeinsames Fußbremsventil 16 zugeordnet ist, einen Parkbremskreis 18, dem ein Parkbremsventil 20 zugeordnet ist, ein Anhängersteuerventil 22, die Ventileinrichtung 30', ein elektronisches Bremssteuergerät 24 sowie vier Drehzahlsensoren 26a, 26b; 28a, 28b, welche an den Rädern 4a, 4b; 8a, 8b der beiden Fahrzeugachsen 2, 6 angeordnet und über elektrische Sensorleitungen an das Bremssteuergerät 24 angeschlossen sind. Zur Vermeidung einer unübersichtlich hohen Anzahl von Bezugszeichen sind die elektrischen Sensorleitungen der Drehzahlsensoren 26a, 26b; 28a, 28b wie auch weitere elektrische Sensorleitungen und Steuerleitungen, welche jeweils durch gestrichelte Linien dargestellt sind, in der Fig. 4 nicht mit Bezugszeichen versehen.

Der erste Betriebsbremskreis 12 umfasst einen ersten Druckluftspeicher 32, in dem die gespeicherte Druckluft vorliegend beispielhaft unter einem Druck von 13 × 10⁵ Pa steht, eine von diesem Druckluftspeicher 32 zu dem Fußbremsventil 16 geführte erste Vorratsleitung 34, sowie eine von dem Fußbremsventil 16 zu zwei Radbremsleitungen 38a, 38b und an diese angeschlossene Radbremszylinder 40a, 40b der Hinterachse 6 geführte erste Achsbremsleitung 36.

Der zweite Betriebsbremskreis 14 umfasst einen zweiten Druckluftspeicher 42, in dem die gespeicherte Druckluft vorliegend ebenfalls unter einem Druck von 13 × 10⁵ Pa steht, eine von diesem Druckluftspeicher 42 zu dem Fußbremsventil 16 geführte zweite Vorratsleitung 44, sowie eine von dem Fußbremsventil 16 zu vorderen Radbremsleitungen 48a, 48b und an diese angeschlossene Radbremszylinder 50a, 50b der Vorderachse 2 geführte zweite Achsbremsleitung 46.

Der Parkbremskreis 18 umfasst einen dritten Druckluftspeicher 52, in dem die gespeicherte Druckluft vorliegend beispielhaft unter einem Druck von 8,5 × 10⁵ Pa steht, eine von diesem Druckluftspeicher 52 zu dem Parkbremsventil 20 geführte dritte Vorratsleitung 54, sowie eine von dem Parkbremsventil 20 zu Radbremsleitungen 58a, 58b und an diese angeschlossene Federspeicherbremszylinder 60a, 60b der Hinterachse 6 geführte Achsbremsleitung 56. Die vorzugsweise als Membranbremszylinder ausgebildeten Radbremszylinder 40a, 40b des ersten Betriebsbremskreises 12 und die Federspeicherbremszylinder 60a, 60b des Parkbremskreises 18 sind vorliegend jeweils als Kombinationsbremszylindern zusammengefasst und auf dieselben Radbremsen an den Rädern 8a, 8b der Hinterachse 6 wirksam.

Anstelle einer unmittelbaren Verzweigung in die vorderen Radbremsleitungen 48a, 48b ist die Achsbremsleitung 46 des zweiten Betriebsbremskreises 14 an den Steuereingang eines druckgesteuerten ersten Relaisventils 64 angeschlossen, an welches auch eine vierte Vorratsleitung 62 geführt ist, welche von der dem zweiten Druckluftspeicher 42 zugeordneten zweiten Vorratsleitung 44 abzweigt. In dem ersten Relaisventil 64 wird der an dessen Steuereingang anliegende Luftdruck luftmengenverstärkt in einen Bremsdruck umgesetzt, welcher in die angeschlossenen Radbremsleitungen 48a, 48b der Vorderachse 2 geleitet wird. In den Radbremsleitungen 48a, 48b der Vorderachse 2 ist jeweils eine ABS-Ventileinheit 66a, 66b angeordnet, welche über jeweils eine elektrische Steuerleitung mit dem Steuergerät 24 verbunden sind. Über die beiden ABS-Ventileinheiten 66a, 66b wird der jeweilige Bremsdruck abgesenkt, wenn durch die Auswertung der Drehzahlsignale der Drehzahlsensoren 26a, 26b, 28a, 28b in der Steuereinheit 24 ein Blockieren oder eine Blockierneigung eines der Räder 4a, 4b der Vorderachse 2 festgestellt wird.

In der Achsbremsleitung 46 des zweiten Betriebsbremskreises 14 ist zudem ein Umschaltventil 70 angeordnet, welches als ein 3/2-Wege-Magnetventil ausgebildet und über eine elektrische Steuerleitung mit dem Steuergerät 24 verbunden ist. Der fußbremsventilseitige Abschnitt 46a der Achsbremsleitung 46 ist an einen ersten Eingang des Umschaltventils 70 angeschlossen. An einen zweiten Eingang des Umschaltventils 70 ist eine vierte Vorratsleitung 68 angeschlossen, welche von der an den Druckluftspeicher 52 des Parkbremskreises 18 angeschlossenen Vorratsleitung 54 abzweigt. Der relaisventilseitige Abschnitt 46b der Achsbremsleitung 46 ist an den Steuereingang des ersten Relaisventils 64 angeschlossen.

Im unbestromten Zustand des Umschaltventils 70 ist dessen erster Eingang mit dem Ausgang des Umschaltventils 70 verbunden und der zweite Eingang abgesperrt, sodass der über das Fußbremsventil 16 in den fußbremsventilseitigen Abschnitt 46a der Achsbremsleitung 46 eingesteuerte Bremsdruck dann über den relaisventilseitigen Abschnitt 46b der Achsbremsleitung 46 an dem Steuereingang des Relaisventils 64 anliegt, und ein entsprechender Bremsdruck in die Radbremsleitungen 48a, 48b der Vorderachse 2 eingesteuert wird.

Im bestromten und somit umgeschalteten Zustand des Umschaltventils 70 ist dessen zweiter Eingang mit dem Ausgang des Umschaltventils 70 verbunden und der erste Eingang des Umschaltventils 70 ist abgesperrt. In dessen Folge liegt der Vorratsdruck des Druckluftspeichers 52 des Parkbremskreises 18 in Höhe von 8,5 × 10⁵ Pa an dem Steuereingang des Relaisventils 64 an und ein entsprechender Bremsdruck wird dann in die Radbremsleitungen 48a, 48b der Vorderachse 2 eingesteuert.

Durch die beschriebene Umschaltung des Umschaltventils 70 können die Räder 4a, 4b der Vorderachse 2 somit unabhängig von einer Betätigung des Fußbremsventils 16 abgebremst werden, welches zum Beispiel zur Vermeidung eines Auffahrunfalls in Verbindung mit einem Abstandsassistenzsystem zur Notbremsung des Zugfahrzeugs genutzt werden kann.

In ähnlicher Weise ist auch die Achsbremsleitung 36 des ersten Betriebsbremskreises 12 für die Räder der Hinterachse 6 anstelle einer unmittelbaren Verzweigung in die Radbremsleitungen 38a, 38b an den Steuereingang eines druckgesteuerten Relaisventils angeschlossen, an welches eine fünfte Vorratsleitung 72 geführt ist, die von der Vorratsleitung 34 des zugeordneten ersten Druckluftspeichers 32 abzweigt. Im Unterschied zu der Anordnung für die Vorderachse 2 ist das Relaisventil für die Hinterachse 6 jedoch in einem Achsventilmodul 74 angeordnet. In dem Relaisventil wird der an dem Steuereingang anliegende Luftdruck luftmengenverstärkt in einen Bremsdruck umgesetzt, welcher in die angeschlossenen Radbremsleitungen 38a, 38b für die Bremsen der Hinterachse 6 geleitet wird. In diesen Radbremsleitungen 38a, 38b für die Bremsen der Hinterachse ist jeweils auch eine ABS-Ventileinheit angeordnet, welche ebenfalls in dem Achsventilmodul 74 angeordnet sowie über jeweils eine elektrische Steuerleitung mit dem Steuergerät 24 verbunden ist. Über die ABS-Ventileinheiten des Achsventilmoduls 70, welche nicht gesondert bezeichnet sind, wird der jeweilige Bremsdruck abgesenkt, wenn durch die Auswertung der Drehzahlsignale der Drehzahlsensoren 26a, 26b, 28a, 28b in der Steuereinheit 24 ein Blockieren oder eine Blockierneigung eines der Räder 8a, 8b der Hinterachse 6 festgestellt wird.

Das Achsventilmodul 70 des ersten Betriebsbremskreises 12 enthält zudem ein nicht gesondert bezeichnetes Umschaltventil, welches als ein 3/2-Wege-Magnetventil ausgebildet und über eine elektrische Steuerleitung mit dem Steuergerät 24 verbunden ist. Die erste Achsbremsleitung 36 ist an einen ersten Eingang dieses Umschaltventils angeschlossen. An einen zweiten Eingang des Umschaltventils ist die von der Vorratsleitung 34 des zugeordneten ersten Druckluftspeichers 32 abzweigende fünfte Vorratsleitung 72 angeschlossen. Der Ausgang des Umschaltventils ist an den Steuereingang des Relaisventils angeschlossen.

Im unbestromten Zustand des Umschaltventils ist dessen erster Eingang mit dem Ausgang des Umschaltventils verbunden und der zweite Eingang des Umschaltventils abgesperrt, sodass der über das Fußbremsventil 16 in die erste Achsbremsleitung 36 eingesteuerte Bremsdruck an dem Steuereingang des Relaisventils anliegt und ein entsprechender Bremsdruck in die Radbremsleitungen 38a, 38b der Hinterachse 6 eingesteuert wird.

Im bestromten und somit umgeschalteten Zustand des Umschaltventils ist der zweite Eingang des Umschaltventils mit dem Ausgang des Umschaltventils verbunden und der erste Eingang des Umschaltventils abgesperrt, sodass dann der Vorratsdruck des Druckluftspeichers 32 des ersten Betriebsbremskreises 12 in Höhe von 13 × 10⁵ Pa an dem Steuereingang des Relaisventils anliegt sowie ein entsprechender Bremsdruck in die Radbremsleitungen 38a, 38b der Hinterachse 6 eingesteuert wird. Durch die Umschaltung des Umschaltventils können somit auch die Räder 8a, 8b der Hinterachse 6 unabhängig von einer Betätigung des Fußbremsventils 16 abgebremst werden.

Anstelle einer unmittelbaren Verzweigung in die hinteren Radbremsleitungen 58a, 58b ist die Achsbremsleitung 56 des Parkbremskreises 18 an den Steuereingang eines druckgesteuerten zweiten Relaisventils 78 angeschlossen, an das auch eine sechste Vorratsleitung 76 geführt ist, welche von der dem dritten Druckluftspeicher 52 zugeordneten dritten Vorratsleitung 54 abzweigt. In dem zweiten Relaisventil 78 wird der an dessen Steuereingang anliegende Luftdruck luftmengenverstärkt in einen Bremslösedruck umgesetzt, welcher in die angeschlossenen Radbremsleitungen 58a, 58b und die an diese angeschlossenen Federspeicherbremszylinder 60a, 60b der Hinterachse 6 geleitet wird.

Das Anhängersteuerventil 22 weist einen Vorratseingang p13, zwei direkte Steuereingänge p41, p42, einen invertierten Steuereingang p43, einen Vorratsausgang p21, einen Bremssteuerausgang p22 und einen Entlüftungsausgang p3 auf. An den Vorratseingang p13 des Anhängersteuerventils 22 ist eine siebte Vorratsleitung 80 angeschlossen, welche von der an den dritten Druckluftspeicher 52 des Parkbremskreises 18 angeschlossenen Vorratsleitung 54 abzweigt. An den ersten direkten Steuereingang p41 ist eine Bremssteuerleitung 82' angeschlossen, welche von dem inneren, zwischen dem ersten Relaisventil 64 und der ABS-Ventileinheit 66a der rechten Radbremsleitung 48a der Vorderachse 2 befindlichen Abschnitt 48a' der Radbremsleitung 48a abzweigt. An den zweiten direkten Steuereingang p42 ist eine Bremssteuerleitung 84 angeschlossen, welche von der Achsbremsleitung 36 des ersten Betriebsbremskreises 12 für die Bremsen der Hinterachse 6 abzweigt. An den invertierten Steuereingang p43 ist eine Bremssteuerleitung 86 angeschlossen, welche von der Achsbremsleitung 56 des Parkbremskreises 18 für die Bremsen der Hinterachse 6 abzweigt.

Von dem Vorratsausgang p21 des Anhängersteuerventils 22 ist eine achte Vorratsleitung 88 zu einem Kupplungskopf "Vorrat" (rot) 90 geführt. Von dem Bremssteuerausgang p22 des Anhängersteuerventils 22 ist eine Bremssteuerleitung 92 zu einem Kupplungskopf "Bremse" (gelb) 94 geführt. In dem Anhängersteuerventil 22 wird abhängig von den an den direkten Steuereingängen p41, p42 anliegenden Bremssteuerdrücken beziehungsweise Bremsdrücken und abhängig von dem an dem invertierten Steuereingang p43 anliegenden Bremssteuerdruck beziehungsweise Bremslösedruck ein Bremssteuerdruck ausgesteuert, welcher über den Bremssteuerausgang p22 und die Bremssteuerleitung 92 an den Kupplungskopf "Bremse" (gelb) 94 geleitet wird sowie in einem angekoppelten Anhängerfahrzeug in dem dortigen Anhängerbremsventil in einen Bremsdruck für die dortigen Radbremsen umgesetzt wird.

Die Ventileinrichtung 30' zur fußbremsventilunabhängigen Abbremsung eines angekoppelten Anhängerfahrzeugs weist eine elektronisch steuerbare Ventileinheit 96 auf, welche in der zu dem ersten direkten Steuereingang p41 des Anhängersteuerventils 22 führenden Bremssteuerleitung 82' angeordnet ist. Diese Ventileinheit 96 weist einen Eingang, einen Ausgang und einen Entlüftungsausgang auf. An den Eingang ist der bremsleitungsseitige Abschnitt der Bremssteuerleitung 82' angeschlossen, und an den Ausgang ist der anhängersteuerventilseitige Abschnitt der Bremssteuerleitung 82' angeschlossen. Außerdem ist diese Ventileinheit 96 über eine elektrische Steuerleitung mit dem Steuergerät 24 verbunden. Zur Betätigung der Ventileinheit 96 ist der Ventileinrichtung 30' eine elektrische Bedienungseinheit 98 zugeordnet, welche in der Fahrerkabine des Zugfahrzeugs angeordnet sowie über eine elektrische Steuerleitung mit dem Steuergerät 24 verbunden ist.

Im unbetätigten, also nicht umgeschalteten Zustand der Ventileinheit 96 der Ventileinrichtung 30' ist deren Eingang mit dem deren Ausgang verbunden und der Entlüftungsausgang abgesperrt, sodass der in der rechten Radbremsleitung 48a der Vorderachse 2 anliegende Bremsdruck auch als Bremssteuerdruck an dem ersten direkten Steuereingang p41 des Anhängersteuerventils 22 anliegt. Im umgeschalteten Zustand der Ventileinheit 96 ist deren Eingang abgesperrt und deren Ausgang mit dem Entlüftungsausgang verbunden, sodass der direkte Steuereingang p41 des Anhängersteuerventils 22 dann entlüftet wird.

Um während der Fahrt des Fahrzeuggespanns mit gelösten Radbremsen, also entlüfteten Radbremszylindern 40a, 40b; 50a, 50b und druckführenden Federspeicherbremszylindern 60a, 60b eine von einer Betätigung des Fußbremsventils unabhängige Abbremsung eines angekoppelten Anhängerfahrzeugs, insbesondere zur Durchführung einer Streckbremsung, durchführen zu können, ist bei dieser bekannten Ventileinrichtung 30' die Umschaltung des Umschaltventils 70 des zweiten Betriebsbremskreises 14 und die Umschaltung der ABS-Ventileinheiten 66a, 66b der Vorderachse 2 in ihre Entlüftungsstellung erforderlich.

Mit der Umschaltung des Umschaltventils 70 wird der Vorratsdruck aus dem dritten Druckluftspeicher 52 des Parkbremskreises 18 auf den Steuereingang des ersten Relaisventils 64 geschaltet, sodass in diesem ein entsprechender Bremsdruck in die Radbremsleitungen 48a, 48b der Vorderachse 2 eingesteuert wird. Mit der Umschaltung der ABS-Ventileinheiten 66a, 66b in ihre Entlüftungsstellung werden die Radbremszylinder 50a, 50b der Vorderachse 2 drucklos gehalten, damit die Räder 4a, 4b der Vorderachse 2 nicht abgebremst werden. Die Abbremsung beziehungsweise Streckbremsung des Anhängerfahrzeugs mittels der Umschaltung der Ventileinheit 96 der Ventileinrichtung 30' kann dann dauerhaft oder durch wiederholtes Umschalten gepulst erfolgen.

Nachteilig an dieser Anordnung insbesondere der Bremssteuerleitung 82' und der Ventileinheit 96 der Ventileinrichtung 30' ist der hohe steuerungstechnische Aufwand, welcher durch die Umschaltung des Umschaltventils 70, der beiden ABS-Ventileinheiten 66a, 66b und der Ventileinheit 96 gegeben ist. Nachteilig ist auch, dass die Räder 4a, 4b der Vorderachse 2 nicht abgebremst werden, wenn der Fahrer beispielsweise während einer Streckbremsung des Anhängerfahrzeugs das Fußbremsventil 16 betätigt. Eine Betätigung des Fußbremsventils 16 wird zwar über einen in diesem angeordneten Sensor oder Bremslichtschalter erfasst und über eine elektrische Sensorleitung an das Steuergerät 24 übermittelt. Eine dadurch ausgelöste Umschaltung des Umschaltventils 70, der ABS-Ventileinheiten 66a, 66b und der Ventileinheit 96 führt jedoch zu einem nachteiligen verzögerten Ansprechen der Radbremsen an der Vorderachse 2.

In der Fig. 1 ist eine Druckluftbremsanlage 10 eines Zugfahrzeugs mit einer erfindungsgemäßen Ventileinrichtung 30 zur fußbremsventilunabhängigen Abbremsung eines angekoppelten Anhängerfahrzeugs abgebildet, mit welcher die gerade genannten Nachteile vermieden werden.

Bei im Vergleich mit der Druckluftbremsanlage 10' gemäß Fig. 4 sonst weitgehend gleichem Aufbau der Druckluftbremsanlage 10 ist die an den ersten direkten Steuereingang p41 des Anhängersteuerventils 22 angeschlossene Bremssteuerleitung 82 nun an die Achsbremsleitung 46 des zweiten Betriebsbremskreises 14 beziehungsweise der Vorderachse 2 angeschlossen. Zudem weist die erfindungsgemäße Ventileinrichtung 30 zur fußbremsventilunabhängigen Abbremsung eines angekoppelten Anhängerfahrzeugs eine elektronisch steuerbare Ventileinheit 100, 100' auf, welche nun in der zu dem invertierten Steuereingang p43 des Anhängersteuerventils 22 führenden Bremssteuerleitung 86 angeordnet ist. Diese Ventileinheit 100, 100' weist einen Eingang 102, einen Ausgang 104 und einen Entlüftungsausgang 106 auf. An den Eingang 102 ist der parkbremsventilseitige Abschnitt 86a der Bremssteuerleitung 86 angeschlossen, und an den Ausgang 104 ist der anhängersteuerventilseitige Abschnitt 86b der Bremssteuerleitung 86 angeschlossen. Außerdem ist diese Ventileinheit 100, 100' über eine elektrische Steuerleitung mit dem Steuergerät 24 verbunden. Die Betätigung dieser Ventileinheit 100, 100' erfolgt wie zuvor beschrieben mittels des elektrischen Bedienungselements 98, welches in der Fahrerkabine des Zugfahrzeugs angeordnet und über eine elektrische Steuerleitung mit dem Steuergerät 24 verbunden ist.

In einer in Fig. 2 schematisch dargestellten ersten Ausführungsform umfasst die Ventileinheit 100 ein Einlassventil 108 und ein Auslassventil 110. Das Einlassventil 108 ist als ein 2/2-Wege-Magnetventil ausgebildet und zwischen dem Eingang 102 und dem Ausgang 104 der Ventileinheit 100 angeordnet. Das Auslassventil 110 ist ebenfalls als ein 2/2-Wege-Magnetventil ausgebildet und zwischen dem Ausgang 104 und dem Entlüftungsausgang 106 der Ventileinheit 100 angeordnet. Der Eingang 102 ist im unbestromten Zustand des Einlassventils 108 mit dem Ausgang 104 verbunden sowie im bestromten Zustand des Einlassventils 108 abgesperrt. Der Entlüftungsausgang 106 der Ventileinheit 100 ist im unbestromten Zustand des Auslassventils 110 abgesperrt und im bestromten Zustand des Auslassventils 110 mit dem Ausgang 104 verbunden.

In der in Fig. 3 schematisch abgebildeten zweiten Ausführungsform ist die Ventileinheit 100' als ein 3/2-Wege-Magnetventil 112 mit einem Eingang 102, einem Ausgang 104 und einem Entlüftungsausgang 106 ausgebildet. Der Eingang ist im unbestromten Zustand des Magnetventils 100' mit dem Ausgang 104 verbunden und im bestromten Zustand abgesperrt. Der Entlüftungsausgang 106 der Ventileinheit 100' ist im unbestromten Zustand des Magnetventils 100' abgesperrt und im bestromten Zustand mit dem Ausgang 104 verbunden.

Im unbetätigten, also nicht umgeschalteten Zustand der beiden erfindungsgemäßen Ventileinheiten 100, 100' ist der Eingang 102 somit mit dem Ausgang 104 verbunden und der Entlüftungsausgang 106 abgesperrt, sodass der in der über das Parkbremsventil 20 in die Bremssteuerleitung 86 eingesteuerte Bremslösedruck auch als Bremssteuerdruck an dem invertierten Steuereingang p43 des Anhängersteuerventils 22 anliegt. Im umgeschalteten, also betätigten Zustand dieser Ventileinheiten 100, 100' ist deren Eingang 102 abgesperrt und deren Ausgang 104 mit dem Entlüftungsausgang 106 verbunden, sodass der invertierte Steuereingang p43 des Anhängersteuerventils 22 dann entlüftet wird.

Um während der Fahrt des Fahrzeuggespanns mit gelösten Radbremsen, also entlüfteten Radbremszylindern 40a, 40b; 50a, 50b und druckführenden Federspeicherbremszylindern 60a, 60b, eine von einer Betätigung des Fußbremsventils unabhängige Abbremsung eines angekoppelten Anhängerfahrzeugs, insbesondere zur Durchführung einer Streckbremsung, durchführen zu können, ist bei der erfindungsgemäßen Ventileinrichtung 30 nur die Umschaltung der Ventileinheit 100, 100' erforderlich, welches dauerhaft oder durch wiederholtes Umschalten gepulst erfolgen kann.

Wenn der Fahrer nun zum Beispiel während einer Streckbremsung des Anhängerfahrzeugs das Fußbremsventil 16 betätigt, werden die Radbremszylinder 40a, 40b; 50a, 50b beider Fahrzeugachsen 2, 6 unverzüglich mit den über das Fußbremsventil 16 in die Achsbremsleitungen 36, 46 eingesteuerten Bremsdrücke beaufschlagt und damit das Zugfahrzeug abgebremst. Die Abbremsung des Anhängerfahrzeugs erfolgt dann mittels einer Übersteuerung des an dem invertierten Steuereingang p43 anliegenden Bremslösedruckes in dem Anhängersteuerventil 22 durch die an den direkten Steuereingängen p41, p42 anliegenden Bremsdrücke aus den Achsbremsleitungen 36, 46 der beiden Betriebsbremskreise 12, 14.

### Bezugszeichenliste (Teil der Beschreibung)

- 2: Fahrzeugachse, Vorderachse
- 4a, 4b: Vordere Räder
- 6: Fahrzeugachse, Hinterachse
- 8a, 8b: Hintere Räder
- 10, 10': Druckluftbremsanlage
- 12: Erster Betriebsbremskreis
- 14: Zweiter Betriebsbremskreis
- 16: Fußbremsventil
- 18: Parkbremskreis
- 20: Parkbremsventil
- 22: Anhängersteuerventil
- 24: Elektronisches Bremssteuergerät
- 26a, 26b: Drehzahlsensoren
- 28a, 28b: Drehzahlsensoren
- 30, 30': Ventileinrichtung
- 32: Erster Druckluftspeicher
- 34: Erste Vorratsleitung
- 36: Erste Achsbremsleitung
- 38a, 38b: Hinterer Radbremsleitungen
- 40a, 40b: Hinterer Radbremszylinder
- 42: Zweiter Druckluftspeicher
- 44: Zweite Vorratsleitung
- 46: Zweite Achsbremsleitung
- 46a: Fußbremsventilseitiger Abschnitt der zweiten Achsbremsleitung 46
- 46b: Relaisventilseitiger Abschnitt der zweiten Achsbremsleitung 46
- 48a, 48b: Vordere Radbremsleitungen
- 48a': Innerer Abschnitt von 48a
- 50a, 50b: Vordere Radbremszylinder
- 52: Dritter Druckluftspeicher
- 54: Dritte Vorratsleitung
- 56: Dritte Achsbremsleitung
- 58a, 58b: Radbremsleitungen
- 60a, 60b: Federspeicherbremszylinder
- 62: Vorratsleitung
- 64: Erstes Relaisventil
- 66a, 66b: ABS-Ventileinheiten
- 68: Vierte Vorratsleitung
- 70: Umschaltventil, 3/2-Wege-Magnetventil
- 72: Fünfte Vorratsleitung
- 74: Achsventilmodul
- 76: Sechste Vorratsleitung
- 78: Zweites Relaisventil
- 80: Siebte Vorratsleitung
- 82, 82': Bremssteuerleitung
- 84: Bremssteuerleitung
- 86: Bremssteuerleitung
- 86a: Parkbremsventilseitiger Abschnitt von 86
- 86b: Anhängersteuerventilseitiger Abschnitt von 86
- 88: Achte Vorratsleitung
- 90: Kupplungskopf "Vorrat" (rot)
- 92: Bremssteuerleitung
- 94: Kupplungskopf "Bremse" (gelb)
- 96: Ventileinheit (Stand der Technik)
- 98: Bedienungseinheit
- 100, 100': Ventileinheit
- 102: Eingang der 100, 100'
- 104: Ausgang der 100, 100
- 106: Entlüftungsausgang der 100, 100
- 108: Einlassventil, 2/2-Wege-Magnetventil
- 110: Auslassventil, 2/2-Wege-Magnetventil
- 112: Magnetventil, 3/2-Wege-Magnetventil
- p3: Entlüftungsausgang des Anhängersteuerventils 22
- p13: Vorratseingang des Anhängersteuerventils 22
- p21: Vorratsausgang des Anhängersteuerventils 22
- p22: Bremssteuerausgang des Anhängersteuerventils 22
- p41: Erster direkter Steuereingang des Anhängersteuerventils 22
- p42: Zweiter direkter Steuereingang des Anhängersteuerventils 22
- p43: Invertierter Steuereingang des Anhängersteuerventils 22

## Patentansprüche

1. Druckluftbremsanlage (10, 10') eines Zugfahrzeugs, mit einem Parkbremskreis (18), der einen dritten Druckluftspeicher (52), eine von dem dritten Druckluftspeicher (52) zu einem Parkbremsventil (20) geführte Vorratsleitung (54) sowie eine Achsbremsleitung (56) aufweist, welche von dem Parkbremsventil (20) zu Radbremsleitungen (58a, 58b) und an diese angeschlossene Federspeicherbremszylinder (60a, 60b) einer Fahrzeugsachse (6) führt, und mit einem Anhängersteuerventil (22), welches mindestens einen direkten Steuereingang (p41, p42) sowie einen invertierten Steuereingang (p43) aufweist, sowie mit einer Ventileinrichtung (30, 30') zur Steuerung einer von einem Fußbremsventil (16) unabhängigen Abbremsung eines angekoppelten Anhängerfahrzeugs, wobei die Ventileinrichtung (30) eine elektronisch steuerbare Ventileinheit (100, 100') aufweist, und die Ventileinheit (100, 100') in der an den invertierten Steuereingang (p43) des Anhängersteuerventils (22) angeschlossenen Bremssteuerleitung (86) angeordnet ist, wobei die Ventileinheit (100, 100') einen Eingang (102), einen Ausgang (104) und einen Entlüftungsausgang (106) aufweist, wobei an den Ausgang (104) der anhängersteuerventilseitige Abschnitt (86b) der Bremssteuerleitung (86) angeschlossen ist, und wobei der anhängersteuerventilseitige Abschnitt (86b) der Bremssteuerleitung (86) über die Ventileinheit (100, 100') wechselweise mit dem Eingang (102) oder mit dem Entlüftungsausgang (106) verbindbar ist.
**dadurch gekennzeichnet, dass**
die Druckluftbremsanlage (10, 10') zumindest zwei Betriebsbremskreise (12, 14) aufweist, die jeweils einen Druckluftspeicher (32, 42), eine von dem jeweiligen Druckluftspeicher (32, 42) zu dem Fußbremsventil (16) geführte Vorratsleitung (34, 44) und eine von dem Fußbremsventil (16) zu Radbremsleitungen (38a, 38b; 48a, 48b) und an diese angeschlossene Radbremszylinder (40a, 40b; 50a, 50b) einer jeweiligen Fahrzeugachse (2, 6) geführte Achsbremsleitung (36, 46) aufweisen, wobei an den mindestens einen direkten Steuereingang (p41, p42) des Anhängersteuerventils (22) eine an eine Bremsleitung (36, 46, 48a) eines der beiden Betriebsbremskreise (12, 14) angeschlossene Bremssteuerleitung (82, 82', 84) angeschlossen ist, und
dass bei dem an dem invertierten Steuereingang (p43) des Anhängersteuerventils (22) eine an eine Bremsleitung (56) des Parkbremskreises (18) angeschlossene Bremssteuerleitung (86) angeschlossen ist, und
dass an den Eingang (102) der Ventileinheit (102) ein parkbremsventilseitiger Abschnitt (86a) der Bremssteuerleitung (86) angeschlossen ist.

2. Druckluftbremsanlage nach Anspruch 1, **dadurch gekennzeichnet, dass** die Ventileinheit (100) ein Einlassventil (108) und ein Auslassventil (110) aufweist, dass das Einlassventil (108) als ein 2/2-Wege-Magnetventil ausgebildet sowie zwischen dem Eingang (102) und dem Ausgang (104) der Ventileinheit (100) angeordnet ist, und dass das Auslassventil (110) als ein 2/2-Wege-Magnetventil ausgebildet ist sowie zwischen dem Ausgang (104) und dem Entlüftungsausgang (106) der Ventileinheit (100) angeordnet ist, wobei der Eingang (102) der Ventileinheit (100) im unbestromten Zustand des Einlassventils (108) mit dem Ausgang (104) verbunden sowie im bestromten Zustand des Einlassventils (108) abgesperrt ist, und wobei der Entlüftungsausgang (106) im unbestromten Zustand des Auslassventils (110) abgesperrt sowie im bestromten Zustand des Auslassventils (110) mit dem Ausgang (106) verbunden ist.

3. Druckluftbremsanlage nach Anspruch 1, **dadurch gekennzeichnet, dass** die Ventileinheit (100') als ein 3/2-Wege-Magnetventil (112) mit einem Eingang (102), einem Ausgang (104) und einem Entlüftungsausgang (106) ausgebildet ist, wobei der Eingang (102) der Ventileinheit (100') im unbestromten Zustand dieses Magnetventils (112) mit dem Ausgang (104) verbunden sowie im bestromten Zustand abgesperrt ist, und wobei der Entlüftungsausgang (106) im unbestromten Zustand dieses Magnetventils (112) abgesperrt sowie im bestromten Zustand mit dem Ausgang (104) verbunden ist.

4. Druckluftbremsanlage nach einem der Ansprüche 1 bis 3, **dadurch gekennzeichnet, dass** die Ventileinheit (100, 100') baugleich wie eine ABS-Ventileinheit (66a, 66b) ausgebildet ist, welche in mindestens einer Radbremsleitung (48a, 48b) einer Fahrzeugachse (2) angeordnet ist.

## Claims

1. Compressed air braking system (10, 10') of a towing vehicle, comprising a parking brake circuit (18) having a third compressed air reservoir (52), a supply line (54) leading from the third compressed air reservoir (52) to a parking brake valve (20), and an axle brake line (56) leading from the parking brake valve (20) to wheel brake lines (58a, 58b) and to spring brake actuators (60a, 60b), attached thereto, of a vehicle axle (6), the compressed air braking system also comprising a trailer control valve (22) having at least one direct control input (p41, p42) and one inverted control input (p43), and comprising a valve apparatus (30, 30') for controlling braking, which is independent of a foot brake valve (16), of a coupled trailer vehicle, the valve apparatus (30) having an electronically controllable valve unit (100, 100'), and the valve unit (100, 100') being arranged in the brake control line (86) attached to the inverted control input (p43) of the trailer control valve (22), the valve unit (100, 100') having an input (102), an output (104) and a vent output (106), the trailer control valve-side portion (86b) of the brake control line (86) being attached to the output (104), and the trailer control valve-side portion (86b) of the brake control line (86) being connectable alternately to the input (102) or to the vent output (106) via the valve unit (100, 100'),
**characterized in that**
the compressed air braking system (10, 10') comprises at least two service brake circuits (12, 14), each having a compressed air reservoir (32, 42), a supply line (34, 44) leading from the relevant compressed air reservoir (32, 42) to the foot brake valve (16), and an axle brake line (36, 46) leading from the foot brake valve (16) to wheel brake lines (38a, 38b; 48a, 48b) and to wheel brake actuators (40a, 40b; 50a, 50b), attached thereto, of a relevant vehicle axle (2, 6), a brake control line (82, 82', 84) attached to a brake line (36, 46, 48a) of one of the two service brake circuits (12, 14) being attached to the at least one direct control input (p41, p42) of the trailer control valve (22), and
**in that** a brake control line (86) attached to a brake line (56) of the parking brake circuit (18) is attached to the at the inverted control input (p43) of the trailer control valve (22), and **in that** a parking brake valve-side portion (86a) of the brake control line (86) is attached to the input (102) of the valve unit (102).

2. Compressed air braking system according to claim 1, **characterized in that** the valve unit (100) comprises an inlet valve (108) and an outlet valve (110), **in that** the inlet valve (108) is designed as a 2/2-way solenoid valve and is arranged between the input (102) and the output (104) of the valve unit (100), and **in that** the outlet valve (110) is designed as a 2/2-way solenoid valve and is arranged between the output (104) and the vent output (106) of the valve unit (100), the input (102) of the valve unit (100) being connected to the output (104) when the inlet valve (108) is de-energized and being blocked when the inlet valve (108) is energized, and the vent output (106) being blocked when the outlet valve (110) is de-energized and being connected to the output (106) when the outlet valve (110) is energized.

3. Compressed air braking system according to claim 1,
**characterized in that** the valve unit (100') is designed as a 3/2-way solenoid valve (112) comprising an input (102), an output (104) and a vent output (106), the input (102) of the valve unit (100') being connected to the output (104) when this solenoid valve (112) is de-energized and being blocked when the solenoid valve is energized, and the vent output (106) being blocked when this solenoid valve (112) is de-energized and being connected to the output (104) when the solenoid valve is energized.

4. Compressed air braking system according to any of claims 1 to 3,
**characterized in that** the valve unit (100, 100') is designed to be structurally identical to an ABS valve unit (66a, 66b) which is arranged in at least one wheel brake line (48a, 48b) of a vehicle axle (2).

## Revendications

1. Système de freinage à air comprimé (10, 10') d'un véhicule tracteur, comportant un circuit de frein de stationnement (18) qui présente un troisième accumulateur d'air comprimé (52), une conduite de réserve (54) menant du troisième accumulateur d'air comprimé (52) à une soupape de frein de stationnement (20) ainsi qu'une conduite de frein d'essieu (56) qui mène de la soupape de frein de stationnement (20) à des conduites de frein de roue (58a, 58b) et à des cylindres de frein à accumulateur de ressort (60a, 60b) d'un essieu de véhicule (6), lesquels sont raccordés auxdites conduites de frein de roue, et comportant une soupape de commande de remorque (22) qui présente au moins une entrée de commande directe (p41, p42) ainsi qu'une entrée de commande inversée (p43), et comportant un dispositif à soupape (30, 30') pour la commande d'un freinage indépendant d'une soupape de frein à pédale (16) d'un véhicule remorqué attelé, dans lequel le dispositif à soupape (30) présente une unité formant soupape (100, 100') à commande électronique, et l'unité formant soupape (100, 100') est disposée dans la conduite de commande de frein (86) raccordée à l'entrée de commande inversée (p43) de la soupape de commande de remorque (22), dans lequel l'unité formant soupape (100, 100') présente une entrée (102), une sortie (104) et une sortie d'évacuation d'air (106), dans lequel la section (86b) située côté soupape de commande de remorque de la conduite de commande de frein (86) est raccordée à la sortie (104), et dans lequel la section (86b) située côté soupape de commande de remorque de la conduite de commande de frein (86) peut être raccordée alternativement à l'entrée (102) ou à la sortie d'évacuation d'air (106) par l'intermédiaire de l'unité formant soupape (100, 100'),
**caractérisé en ce que**
le système de freinage à air comprimé (10, 10') présente au moins deux circuits de frein de service (12, 14) qui présentent respectivement un accumulateur d'air comprimé (32, 42), une conduite de réserve (34, 44) menant de l'accumulateur d'air comprimé (32, 42) respectif à la soupape de frein à pédale (16) et une conduite de frein d'essieu (36, 46) menant de la soupape de frein à pédale (16) aux conduites de frein de roue (38a, 38b ; 48a, 48b) et aux cylindres de frein de roue (40a, 40b ; 50a, 50b) raccordés à celles-ci d'un essieu de véhicule (2, 6) respectif, dans lequel une conduite de commande de frein (82, 82', 84) raccordée à une conduite de frein (36, 46, 48a) de l'un des deux circuits de frein de service (12, 14) est raccordée à l'au moins une entrée de commande directe (p41, p42) de la soupape de commande de remorque (22), et
**en ce qu'**une conduite de commande de frein (86) raccordée à une conduite de frein (56) du circuit de frein de stationnement (18) est raccordée au niveau à l'entrée de commande inversée (p43) de la soupape de commande de remorque (22), et
**en ce qu'**une section (86a) située côté soupape de frein de stationnement de la conduite de commande de frein (86) est reliée à l'entrée (102) de l'unité formant soupape (102).

2. Système de freinage à air comprimé selon la revendication 1,
**caractérisé en ce que** l'unité formant soupape (100) présente une soupape d'admission (108) et une soupape d'échappement (110), **en ce que** la soupape d'admission (108) est réalisée sous forme de soupape électromagnétique à 2/2 voies et est disposée entre l'entrée (102) et la sortie (104) de l'unité formant soupape (100), **et en ce que** la soupape d'échappement (110) est réalisée sous forme de soupape électromagnétique à 2/2 voies et est disposée entre la sortie (104) et la sortie d'évacuation d'air (106) de l'unité formant soupape (100), dans lequel l'entrée (102) de l'unité formant soupape (100) est reliée à la sortie (104) à l'état non alimenté de la soupape d'admission (108) et est bloquée à l'état alimenté de la soupape d'admission (108), et dans lequel la sortie d'évacuation d'air (106) est bloquée à l'état non alimenté de la soupape d'échappement (110) et est reliée à la sortie (106) à l'état alimenté de la soupape d'échappement (110).

3. Système de freinage à air comprimé selon la revendication 1,
**caractérisé en ce que** l'unité formant soupape (100') est réalisée sous forme de soupape électromagnétique à 3/2 voies (112) comportant une entrée (102), une sortie (104) et une sortie d'évacuation d'air (106), dans lequel l'entrée (102) de l'unité formant soupape (100') est reliée à la sortie (104) à l'état non alimenté de ladite soupape électromagnétique (112) et est bloquée à l'état alimenté, et dans lequel la sortie d'évacuation d'air (106) est bloquée à l'état non alimenté de ladite soupape électromagnétique (112) et est reliée à la sortie (104) à l'état alimenté.

4. Système de freinage à air comprimé selon l'une des revendications 1 à 3, **caractérisé en ce que** l'unité formant soupape (100, 100') est réalisée de manière structurellement identique à une unité formant soupape ABS (66a, 66b) qui est disposée dans au moins une conduite de frein de roue (48a, 48b) d'un essieu de véhicule (2).
